(19) 

**Europäisches Patentamt**
**European Patent Office**
**Office européen des brevets**

(11) **EP 3 437 209 B1**

(12) **EUROPEAN PATENT SPECIFICATION**

(45) Date of publication and mention
of the grant of the patent:
**23.06.2021 Bulletin 2021/25**

(51) Int Cl.:
***H04B 7/08*** *(2006.01)* ***H04L 5/00*** *(2006.01)*
***H04B 7/06*** *(2006.01)*

(21) Application number: **17720285.0**

(86) International application number:
**PCT/US2017/025160**

(22) Date of filing: **30.03.2017**

(87) International publication number:
**WO 2017/173154 (05.10.2017 Gazette 2017/40)**

(54) **INTERFERENCE MITIGATION FOR BEAM REFERENCE SIGNALS**

INTERFERENZABSCHWÄCHUNG FÜR STRAHLREFERENZSIGNALE

ÉVITEMENT D'INTERFÉRENCE POUR SIGNAUX DE RÉFÉRENCE DE FAISCEAU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.03.2016 US 201662315429 P**

(43) Date of publication of application:
**06.02.2019 Bulletin 2019/06**

(73) Proprietor: **Intel IP Corporation
Santa Clara, CA 95054 (US)**

(72) Inventors:
• **XIONG, Gang
Portland
Oregon 97229 (US)**
• **LU, Peng
Sunnyvale
California 94087 (US)**
• **MONDAL, Bishwarup
San Jose
California 95129 (US)**
• **FWU, Jong-Kae
Sunnyvale
California 94087 (US)**

(74) Representative: **Goddar, Heinz J.
Boehmert & Boehmert
Anwaltspartnerschaft mbB
Pettenkoferstrasse 22
80336 München (DE)**

(56) References cited:
**EP-A1- 2 467 985        WO-A1-2015/141071
US-A1- 2012 002 740**

EP 3 437 209 B1

## Description

## BACKGROUND

Wireless mobile communication technology uses various standards and protocols to transmit data between a node (e.g., a transmission station) and a wireless device (e.g., a mobile device). Some wireless devices communicate using orthogonal frequency-division multiple access (OFDMA) in a downlink (DL) transmission and single carrier frequency division multiple access (SC-FDMA) in uplink (UL). Standards and protocols that use orthogonal frequency-division multiplexing (OFDM) for signal transmission include the third generation partnership project (3GPP) long term evolution (LTE) Release 8, 9, 10, 11, 12 and 13, the Institute of Electrical and Electronics Engineers (IEEE) 802.16 standard (e.g., 802.16e, 802.16m), which is commonly known to industry groups as WiMAX (Worldwide interoperability for Microwave Access), and the IEEE 802.11 standard, which is commonly known to industry groups as WiFi.

In 3GPP radio access network (RAN) LTE systems (e.g., Release 13 and earlier), the node can be a combination of Evolved Universal Terrestrial Radio Access Network (E-UTRAN) Node Bs (also commonly denoted as evolved Node Bs, enhanced Node Bs, eNodeBs, or eNBs) and Radio Network Controllers (RNCs), which communicates with the wireless device, known as a user equipment (UE). The downlink (DL) transmission can be a communication from the node (e.g., eNodeB) to the wireless device (e.g., UE), and the uplink (UL) transmission can be a communication from the wireless device to the node.

US 2012/0002740 A1 relates to an apparatus for transmitting a reference signal in a wireless communication system. A first base station maps a first reference signal to a resource region and transmits the first reference signal to a user equipment. A second base station maps a second reference signal to said resource region and transmits the second reference signal to said user equipment. The resource elements, to which the first reference signal and the second reference signal are mapped in the resource region, are determined in accordance with the index on a Latin square matrix occupied by two different elements, respectively, from among N elements constituting the Latin square matrix with a size of N×N.

WO 2015/141071 A1 pertains to a technology for implementing cell selection appropriate to 3D MIMO. One mode of this invention pertains to a user device that has the following: a transmission/reception unit that receives a reference-signal list containing precoded reference signals transmitted by a serving base station and a neighboring base station; a measurement unit that measures the received quality level of each of the precoded reference signals on the received reference-signal list; and a beam selection unit that selects, on the basis of the measured received quality levels, a beam for communicating with the serving base station or the neighboring base station and notifies said serving base station or neighboring base station of the selected beam.

EP 2 467 985 A1 relates to method and devices for operating a primary station for communicating with a plurality of secondary stations, transmitting a first subset of reference symbols associated with a spatial channel, where the transmission characteristic of the subset of reference symbols depends on the spatial channel.

## BRIEF DESCRIPTION OF THE DRAWINGS

The invention is defined by the subject matter of the independent claims. Advantageous embodiments are subject to the dependent claims. Embodiments described herein below and that are no longer covered by the claimed subject matter are to be considered examples useful for understanding the invention better.

## BRIEF DESCRIPTION OF THE DRAWINGS

Features and advantages of the disclosure will be apparent from the detailed description which follows, taken in conjunction with the accompanying drawings, which together illustrate, by way of example, features of the disclosure; and, wherein:

FIG. 1 illustrates beamformed transmission and reception in a wireless communication system in accordance with an example;

FIG. 2 illustrates a resource mapping for a subcarrier interleaved beam reference signal (BRS) transmission scheme in relation to a block interleaved BRS transmission scheme in accordance with an example;

FIG. 3 illustrates a technique for generating a beam reference signal (BRS) sequence in accordance with an example;

FIG. 4 is a table of orthogonal cover codes (OCCs) for a beam reference signal (BRS) block in accordance with an example;

FIG. 5 illustrates a beam reference signal (BRS) resource mapping for four BRS antenna ports (APs) in accordance with an example;

FIG. 6 illustrates a beam reference signal (BRS) resource mapping for two BRS antenna ports (APs) in accordance with an example;

FIG. 7 illustrates a beam reference signal (BRS) resource mapping for a mixed number of BRS antenna ports (APs) among cells in accordance with an example;

FIG. 8 depicts functionality of a base station operable to provide beam reference signal (BRS) sequences for a user equipment (UE) in accordance with an example;

FIG. 9 depicts functionality of a user equipment (UE) operable to detect beam reference signal (BRS) sequences received from a base station in accordance with an example;

FIG. 10 depicts a flowchart of a machine readable storage medium having instructions embodied thereon for providing beam reference signal (BRS) sequences from a base station to a user equipment (UE) in accordance with an example;

FIG. 11 illustrates an architecture of a wireless network in accordance with an example;

FIG. 12 illustrates a diagram of a wireless device (e.g., UE) in accordance with an example;

FIG. 13 illustrates interfaces of baseband circuitry in accordance with an example; and

FIG. 14 illustrates a diagram of a wireless device (e.g., UE) in accordance with an example.

Reference will now be made to the exemplary embodiments illustrated, and specific language will be used herein to describe the same. It will nevertheless be understood that no limitation of the scope of the technology is thereby intended.

**DETAILED DESCRIPTION**

Before the present technology is disclosed and described, it is to be understood that this technology is not limited to the particular structures, process actions, or materials disclosed herein, but is extended to equivalents thereof as would be recognized by those ordinarily skilled in the relevant arts. It should also be understood that terminology employed herein is used for the purpose of describing particular examples only and is not intended to be limiting. The same reference numerals in different drawings represent the same element. Numbers provided in flow charts and processes are provided for clarity in illustrating actions and operations and do not necessarily indicate a particular order or sequence.

**EXAMPLE EMBODIMENTS**

An initial overview of technology embodiments is provided below and then specific technology embodiments are described in further detail later. This initial summary is intended to aid readers in understanding the technology more quickly but is not intended to identify key features or essential features of the technology nor is it intended to limit the scope of the claimed subject matter. The scope of protection is defined by the appended set of claims. Embodiments that do not fall under the scope of these claims are useful for understanding the invention.

Mobile communication has evolved significantly from early voice systems to today's highly sophisticated integrated communication platforms. Fourth Generation (4G) LTE networks have been deployed in more than 100 countries to provide services in various spectrum band allocations depending on corresponding spectrum regimes. Recently, development of a fifth generation (5G) wireless communications technology has begun.

In 5G wireless communication systems, both control and data channels at a millimeter-wave or centimeter-wave frequency band can be characterized by a beamformed transmission. With beamforming, an antenna gain pattern can be shaped like a cone pointing to a spatial area so that a high antenna gain can be achieved. At a transmitter (e.g., eNodeB), beamforming can be achieved by applying a phase shift to an antenna array, and the antenna array can be periodically placed in one dimension or in two dimensions. Dependent on the phase shift, multiple beams can be formed at a transmission point (TP) at a time, and beams from different TPs can point to the same location. Similarly, a receiver (e.g., UE) can apply a phase shift to its antenna array to achieve an increased receive gain for a signal arriving from a specific spatial angle.

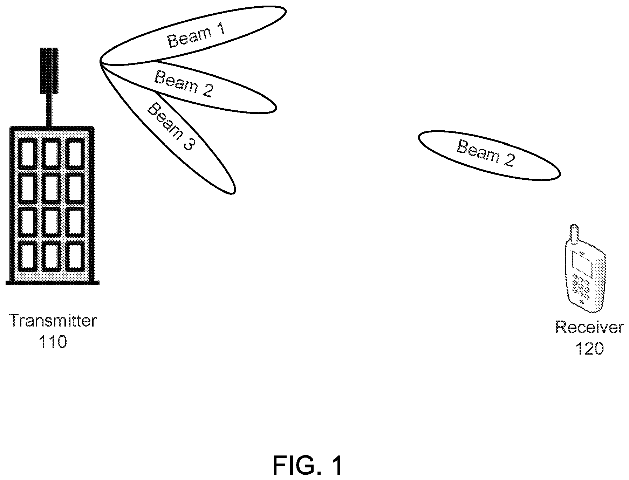

FIG. 1 illustrates an exemplary beamformed transmission and reception in a wireless communication system. For example, a transmitter 110 can transmit a plurality of beams and a receiver 120 (e.g., UE) can receive a plurality of beam. The plurality of beams transmitted from the transmitter 110 can be referred to as transmit beams, and the plurality of beams received at the receiver 120 can be referred to as receive beams.

In one example, an optimal receive signal quality can be achieved by the receiver 120 when the transmit beams are aligned with the receive beams. As an example, the transmitter 110 can transmit beam 1, beam 2 and beam 3 (transmit beams), and the receiver 120 can achieve an optimal receive signal quality with beam 2 (receive beam) due to an alignment of the transmitter 110 and the receiver 120 (i.e., an alignment of the transmit beam and the receive beam).

In one example, the transmitter 110 (e.g., eNodeB) can perform beam sweeping, in which the transmitter 110 can point a number of beams in different directions across a given cell. The receiver 120 (e.g., UE) can measure a signal quality for each of the beams and select a single beam or a set of beams that provide the best receive signal quality for the receiver 120.

In one example, in order to benefit from beamformed transmissions, a UE can perform measurements on available beams. The UE can inform a base station to use a beam that points to the UE's location, which can result in an improvement to a signal to interference and noise ratio (SINR) of a reception signal. However, due to various factors such as initial access, UE mobility, changes in a propagation environment, and UE antenna rotation, a beam direction that is optimal for the UE may not be known or is subject to change. Therefore, the UE can monitor the receive signal quality from all possible beams and notify the base station regarding a single beam or a set of beams that is considered optimal for reception at the UE.

Due to the existence of a relatively large amount of beams and possibly high mobility speed, a low complexity measurement technique at the UE that allows for efficient implementation is desired. In addition, the technique should allow for detection of beams by the UE at low SNR, such that the beams can be monitored and switched to by the UE when beam quality is improved.

In one example, in order to facilitate such measurement, a beam reference signal (BRS) can be employed at the base station. The BRS can be a predefined sequence that is associated with a beam for its transmission. A BRS sequence can be transmitted from the base station to the UE. The UE can utilize a BRS sequence for measurement of a corresponding beam transmitted from the base station.

In one example, with orthogonal frequency-division multiplexing (OFDM) communication systems, a relatively large number of closely spaced resource elements (RE) can be used to carry information symbols.

As described in further detail below, BRS sequences can be generated for millimeter-wave systems. The BRS sequences can be generated for block interleaved BRS transmissions. In addition, inter-cell interference for the BRS transmissions can be reduced when a number of BRS antenna ports (APs) that are supported by the base station is less than a maximum number of BRS APs.

In one configuration, BRS transmissions can be performed using a subcarrier interleaved BRS transmission scheme, or alternatively, using a block interleaved BRS transmission scheme. For both of the subcarrier and block interleaved BRS transmission schemes, different BRS APs can be multiplexed in a frequency division multiplexing (FDM) manner.

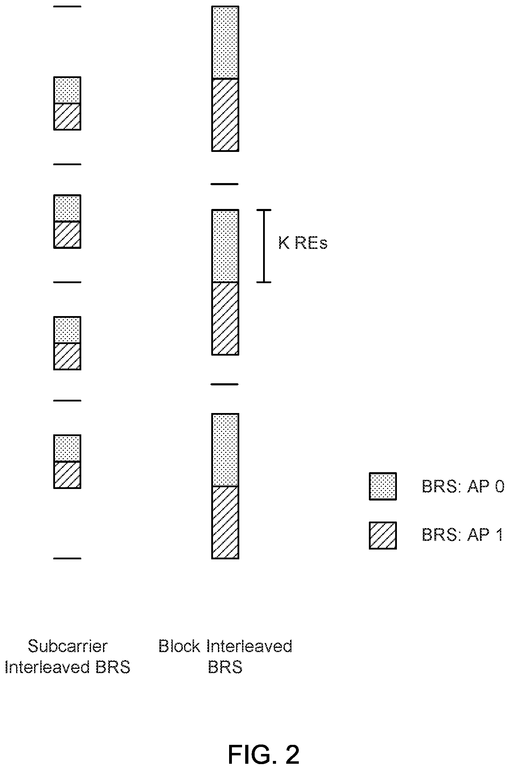

FIG. 2 illustrates an example of a resource mapping for a subcarrier interleaved beam reference signal (BRS) transmission scheme in addition to a block interleaved BRS transmission scheme. For the subcarrier interleaved BRS transmission scheme, different BRS APs (e.g., BRS AP 0 and BRS AP 1) can be transmitted in adjacent resource elements (RE) within one BRS block. For the block interleaved BRS transmission scheme, one BRS AP (e.g., BRS AP 0 or BRS AP 1) can occupy K REs, wherein K is an integer. In addition, one BRS can use multiple blocks in a distributed manner and can span a whole system bandwidth for frequency diversity.

In one configuration, with respect to the block interleaved BRS transmission scheme, a channel can be averaged in each block in a frequency domain, which can lead to superior performance compared to the subcarrier interleaved BRS transmission scheme for scenarios with relatively small delay spread. In addition, to further improve the performance under inter-cell interference conditions, BRS sequences with favorable correlation properties can be employed, as described below.

In one example, when all BRS resources from each cell are being used, inter-cell interference can be suppressed using two mechanisms. In a first mechanism, orthogonal BRS sequences are used between the cells to achieve the inter-cell interference suppression. For example, when different BRS APs are mapped to the same resource, BRS sequences used by the BRS APs are orthogonal to each other by using a different cyclic shift on a same BRS sequence. In a second mechanism, pseudo-orthogonal BRS sequences corresponding to the invention are used between the cells to achieve the inter-cell interference suppression. The BRS sequences are pseudo-orthogonal to each other by using a different root sequence of the BRS sequences.

The BRS sequences are generated as a function of a physical cell identifier (ID), virtual cell ID, BRS symbol index, AP index and/or BRS block index. Different cells can transmit different BRS sequences to randomize the inter-cell interference. In addition, same or different BRS sequences can be used within each BRS AP and each block for one BRS AP.

In one example, the BRS sequence can be generated based on a Zadoff-Chu (ZC) sequence. In this example, a root index or root sequence of the ZC sequence (which is applicable for pseudo-orthogonal ZC sequences) can be defined as a function of a physical or a virtual cell ID or a symbol index within one slot (or subframe). In addition, cyclic shift values to be applied to the ZC sequences can be defined as a function of a BRS AP index, BRS block index and/or BRS symbol index for each BRS AP.

In one configuration, a BRS sequence $(r_{u,v}^{(\alpha_{p,i,l})}(n))$ used for the BRS transmission in a block of $K$ resource elements can be generated as follows:

$$r_{u,v}^{(\alpha_{p,i,l})}(n) = \exp(j\alpha_{p,i,l}n) \cdot \bar{r}_{u,v}(n),$$ wherein $n$ = 0,1,.., $K$ - 1; $i$ = 0,1, ..., $M$ - 1; $p$ = 0,1, ..., $P$ - 1; $l = 0,1,...,2 \cdot N_{sym}^{DL} - 1$. Here, $r_{u,v}(n)$ is a base sequence for a BRS transmission, $u$ is a sequence-group number, $v$ is a sequence number, $\alpha_{p,i,l}$ is a cyclic shift value for a pth BRS AP and a $i$th BRS block and a $l$th symbol within one slot. In other words, $p$ represents a BRS AP index, $i$ represents a BRS block index and $l$ represents a BRS symbol index. Furthermore, $P$ is a total number of BRS APs, $M$ is a number of BRS blocks for one BRS AP and $N_{sym}^{DL}$ is a number of symbols in one slot. In addition, $u$ and $v$ can be determined as a function of a physical cell ID, a virtual cell ID or a symbol/slot/frame index.

In one example, $r_{u,v}(n)$, $u$ and $v$ can be defined and/or generated in accordance with an existing 3GPP LTE Release 14 specification. In addition, ZC sequences can be used for sequence lengths larger than or equal to 36, and computer generated sequences can be used for 1 or 2 physical resource block (PRB) allocations.

In one configuration, within a same cell, same BRS sequence can be applied to all BRS APs and a BRS block for each AP for each symbol. In this case, cyclic shift values associated with the BRS sequences can be fixed or predefined as a function of a physical or a virtual cell ID. For example, $\alpha_{p,i,l} = 0$.

In one configuration, within a same cell, same cyclic shift values can be applied to all BRS APs but different cyclic shift values can be used for different BRS blocks for each AP for each symbol. In particular, the cyclic shift values can be defined as a function of a BRS block index and/or a BRS symbol index, i.e., $\alpha_{p,i,l} = f(i, l)$ or $\alpha_{p,i,l} = f(i)$ or $\alpha_{p,i,l} = f(l)$. In one example, the cyclic shift value can be defined as:

$$\alpha_{p,i,l} = \frac{2\pi}{N_0}(c_0 \cdot i + c_1 \cdot l),$$

wherein $c_0$, $c_1$ are constants that can be predefined or configured for the UE by higher layers via a 5G master information block (MIB), a 5G system information block (SIB) or radio resource control (RRC) signaling from a primary cell (e.g., LTE cell) in an anchor-booster scenario or serving cell. In addition, $N_0$ can be a constant, e.g., $N_0 = 12$.

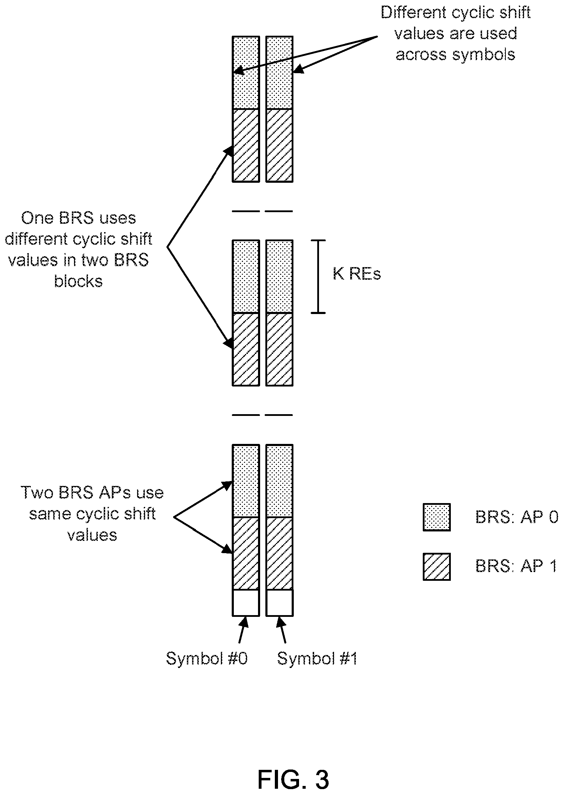

FIG. 3 illustrates an exemplary technique for generating a beam reference signal (BRS) sequence. In this example, one BRS antenna port (AP) (e.g., BRS AP 1) can use different cyclic shift values in two different BRS blocks with respect to a single symbol (e.g., symbol #0). Further, two BRS APs (e.g., BRS AP 0 and BRS AP 1) can use the same cyclic shift values adjacent BRS blocks with respect to a single symbol (e.g., symbol #0). Even further, different cyclic shift values for one BRS AP (e.g., BRS AP 0) can be used across different symbols (e.g., symbol #0 and symbol #1) within one slot.

In one configuration, different cyclic shift values can be applied to all BRS APs and different BRS blocks for each symbol. In particular, cyclic shift values can be defined as a function of a BRS AP index, a BRS block index and a BRS symbol index, i.e., $\alpha_{p,i,l} = f(p, i, l)$. In another configuration, cyclic shift values for different BRS APs and BRS blocks for each BRS AP on each symbol can be predefined or configured for the UE by higher layers via MIBMIB, SIB or RRC signaling. In other words, the cyclic shift values can be provided to the UE via the MIB, SIB or RRC signaling, and the UE can measure a power of the BRS sequences in each AP for beam management using knowledge of the cyclic shift values.

As an example, BRS AP#0 can use $\alpha_{p,i,l} = 1$ for all BRS blocks on each symbol within one slot, and BRS AP#1 can use $\alpha_{p,i,l} = 3$ for all BRS blocks on each symbol within one slot. In addition, when the BRS block size is $2^L$, where $L$ is a positive integer, a Hadamard sequence can be used to generate the BRS sequence.

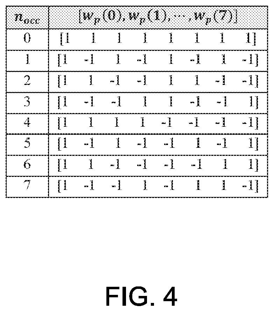

FIG. 4 is an exemplary table of orthogonal cover codes (OCCs) for a beam reference signal (BRS) block. The OCCs can be applied for BRS transmissions within each BRS block. As shown, for a given $n_{occ}$ value (e.g., 0 to 7), a $[w_p(0), w_p(1), ..., w_p(7)]$ can be defined, where $w_p$ represents an orthogonal code or spreading code. In addition, an OCC index for different BRS APs can be same or different. For each BRS AP, an OCC index can be different for different BRS blocks on different OFDM symbol within one slot.

In one configuration, depending on an eNodeB beamforming capability, a number of BRS APs can vary for different eNodeBs. Therefore, when a number of BRS APs supported at a given eNodeB is less than a maximum number of BRS APs that can be potentially transmitted in one symbol, techniques for reducing inter-cell interference for BRS transmissions through dynamic suppression of AP transmissions can be considered.

In one example, when different BRS APs are multiplexed in a frequency division multiplexing (FDM) manner, different cells can transmit the BRS sequences on different resources to further reduce inter-cell interference. For example, within a BRS resource in an OFDM symbol, some cells can suppress the transmission or BRS sequences on certain antenna-port resources to allow neighboring cells to transmit BRS sequences on those resources.

In one configuration, resources used for transmitting BRS sequences can be defined as a function of a physical cell ID when a number of BRS APs supported at a given eNodeB is less than a maximum number of BRS APs (as defined in a LTE wireless system). The maximum number of BRS APs can be the same as a BRS block size. In one example, a number of groups (or resources) for a BRS transmission can be calculated based on: $N_{group} = \lfloor N_{Max}/N_{BRS} \rfloor$, wherein $N_{Max}$ represents a maximum number of BRS APs in one symbol and $N_{BRS}$ represents an actual number of BRS APs transmitted in one symbol. In another example, a number of groups (or resources) for a BRS transmission for a given cell ID can be calculated based on:

$$n_{group} = (N_{ID}^{cell}) mod (N_{group}),$$ wherein $N_{ID}^{cell}$ represents the cell ID and $N_{group} = \lfloor N_{max}/N_{BRS} \rfloor$.

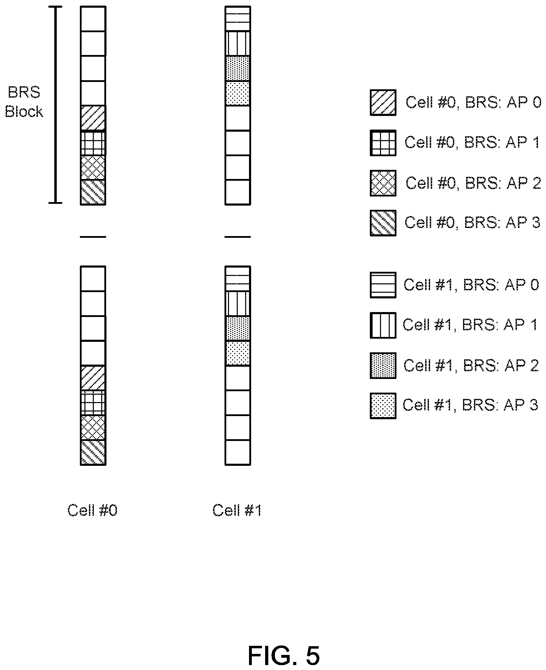

FIG. 5 illustrates an example of beam reference signal (BRS) resource mapping for four BRS antenna ports (APs). As shown, different cells can transmit BRS sequences in different resources within one resource block, which can function to reduce an inter-cell interference and improve a BRS measurement quality at the UE. As shown, a first cell (e.g., cell #0) can transmit BRS sequences for BRS APs 0-3 using a first set of resources, and a second cell (e.g., cell #1) can transmit BRS sequences for BRS APs 0-3 using a second set of resources that are different than the first set of resources utilized by the first cell (e.g., cell #0).

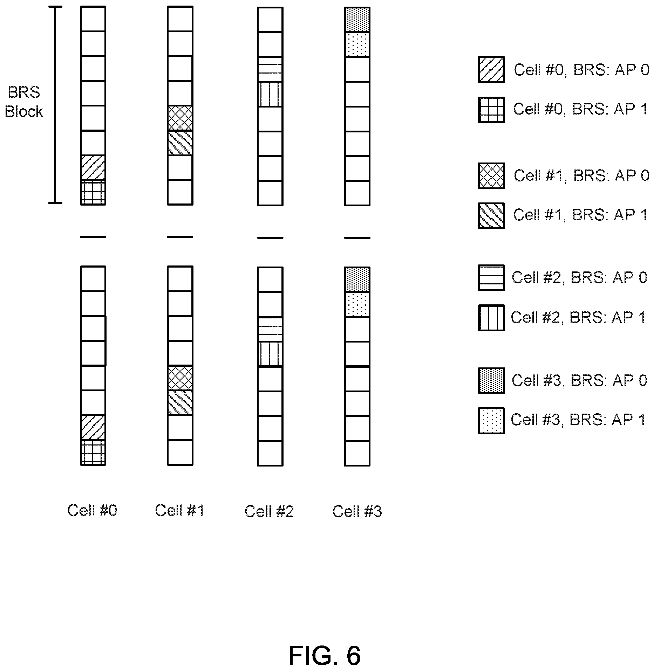

FIG. 6 illustrates an example of beam reference signal (BRS) resource mapping for two BRS antenna ports (APs). As shown, different cells can transmit BRS sequences in different resources within one resource block, which can function to reduce an inter-cell interference and improve a BRS measurement quality at the UE. As shown, a first cell (e.g., cell #0) can transmit BRS sequences for BRS APs 0-1 using a first set of resources, a second cell (e.g., cell #1) can transmit BRS sequences for BRS APs 0-1 using a second set of resources, a third cell (e.g., cell #2) can transmit BRS sequences for BRS APs 0-1 using a third set of resources and a fourth cell (e.g., cell #3) can transmit BRS sequences for BRS APs 0-1 using a fourth set of resources, and each cell can use a distinct set of resources (i.e., the first, second, third and fourth set of resources can be different from each other to reduce the inter-cell interference).

In one configuration, similar design principles can be applied for the block interleaved based BRS transmission scheme. In this case, different cells can transmit the BRS sequences in different blocks for inter-cell interference mitigation.

In one example, resources utilized for the BRS transmission can be predefined or configured for a UE by higher layers via a 5G MIB, a 5G SIB or RRC signaling from a primary cell (e.g., LTE cell) in an anchor-booster scenario or serving cell.

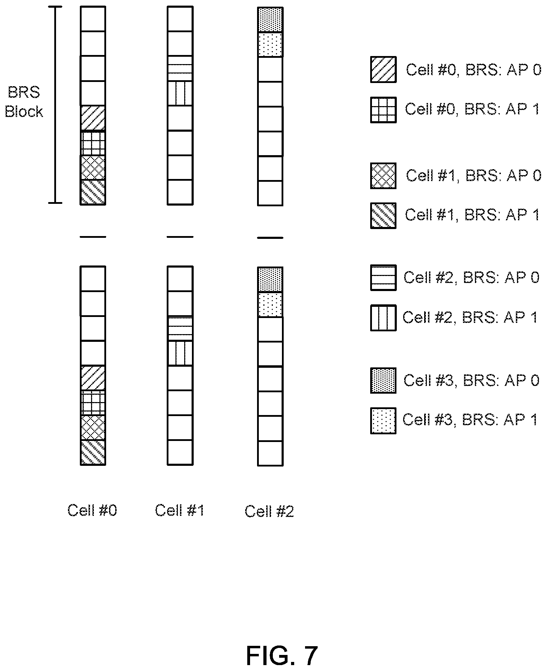

FIG. 7 illustrates an example of a beam reference signal (BRS) resource mapping for a mixed number of BRS antenna ports (APs) among cells. In other words, the BRS resource mapping can be applicable for when different cells use different BRS APs. As shown, a first cell (e.g., cell #0) can transmit BRS sequences for BRS APs 0-3 using a first set of resources, a second cell (e.g., cell #1) can transmit BRS sequences for BRS APs 0-1 using a second set of resources, and a third cell (e.g., cell #2) can transmit BRS sequences for BRS APs 0-1 using a third set of resources. In this example, the first cell (e.g., cell #0) can transmit four BRS APs, the second cell (e.g., cell #1) can transmit two BRS APs, and the third cell (e.g., cell #2) can transmit two BRS APs. Different resources within one BRS block can be used for the BRS transmission among cells. In addition, resources utilized for the BRS transmission can be predefined or configured for a UE by higher layers via a 5G MIB, a 5G SIB or RRC signaling.

In one configuration, in a system for wireless communication, an eNodeB can transmit a beamforming reference signal (BRS) to a UE. The BRS can use same or different sequences associated with different BRS antenna ports. The BRS can be transmitted in one or more symbols within a slot (or subframe). In one example, BRS sequences can be based on M sequences, Zadoff-Chu (ZC) sequences or Hadamard sequences, or alternatively, the sequences can be computer generated sequences for a sequence length less than 1 or 2 physical resource blocks (PRBs). In another example, the BRS sequences can be generated as a function of: a physical cell identifier (ID), a virtual cell ID, a BRS symbol index, an antenna port index and/or a BRS block index.

In one example, a root index of a ZC sequence for a BSR transmission can be defined as a function of a physical cell ID or a virtual cell ID or a BRS symbol index within one slot. In addition, a cyclic shift value to be applied to the ZC sequence is defined as a function of a BRS AP index and/or a BRS block index and/or the BRS symbol index for each BRS AP. In another example, within a same cell, same BRS sequences can be applied to all BRS APs and a BRS block for each AP for each symbol. In addition, a cyclic shift value to be applied to the same BRS sequences can be fixed or predefined as a function of a physical cell ID or a virtual cell ID. In yet another example, within a same cell, same cyclic shift values can be applied to all BRS APs but different cyclic shift values can be used for different BRS blocks for each AP for each symbol. The cyclic shift values can be defined as a function of a BRS block index and/or a BRS symbol index.

In one example, different cyclic shift values can be applied to all BRS APs and different BRS blocks for each symbol. In another example, cyclic shift values for different BRS APs and BRS blocks for each BRS AP on each symbol can be predefined or configured by higher layers. For example, the cyclic shift values can be configured via a 5G master information block (MIB) or a 5G system information block (SIB). Alternatively, the cyclic shift values can be configured via radio resource control (RRC) signaling from a primary cell (e.g., LTE cell) with respect to an anchor-booster scenario or serving cell. In yet another example, different cells can transmit the BRS sequences on different resources.

In one example, resources used for BRS transmissions can be defined as a function of a physical cell ID or a virtual cell ID when a number of BRS APs is less than a maximum number of BRS APs. In another example, resources used for BRS transmissions can be given by: $n_{group} = (N_{ID}^{cell}) mod (N_{group})$, wherein $n_{group}$ is a group index in each block, $N_{ID}^{cell}$ is a physical cell ID and $N_{group}$ is a number of groups in each block. In yet another example, resources used for BRS transmissions can be predefined or configured by higher layers via a 5G MIB or a 5G SIB. Alternatively, the resources can be configured via RRC signaling from a primary cell (e.g., LTE cell) with respect to an anchor-booster scenario or serving cell.

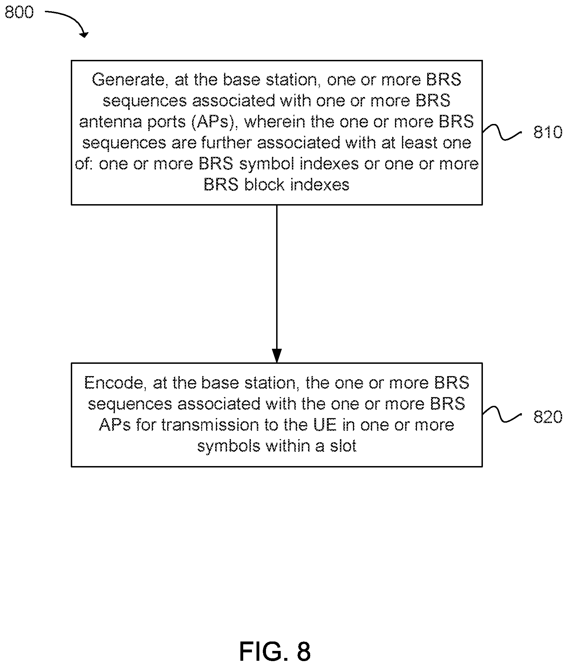

Another example provides functionality 800 of a base station operable to provide beam reference signal (BRS) sequences for a user equipment (UE), as shown in FIG. 8. The base station can comprise one or more processors. The one or more processors can be configured to generate, at the base station, one or more BRS sequences associated with one or more BRS antenna ports (APs), wherein the one or more BRS sequences are further associated with at least one of: one or more BRS symbol indexes or one or more BRS block indexes, as in block 810. The one or more processors can be configured to encode, at the base station, the one or more BRS sequences associated with the one or more BRS APs for transmission to the UE in one or more symbols within a slot, as in block 820. In addition, the base station can comprise memory interfaced with the one or more processors, and the memory can be configured to store the one or more BRS sequences.

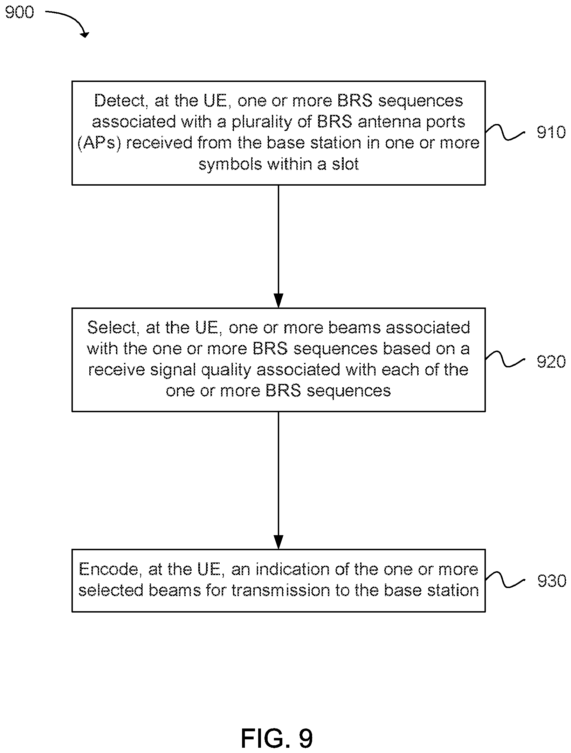

Another example provides functionality 900 of a user equipment (UE) operable to detect beam reference signal (BRS) sequences received from a base station, as shown in FIG. 9. The UE can comprise memory and one or more processors. The one or more processors can be configured to detect, at the UE, one or more BRS sequences associated with a plurality of BRS antenna ports (APs) received from the base station in one or more symbols within a slot, as in block 910. The one or more processors can be configured to select, at the UE, one or more beams associated with the one or more BRS sequences based on a receive signal quality associated with each of the one or more BRS sequences, as in block 920. The one or more processors can be configured to encode, at the UE, an indication of the one or more selected beams for transmission to the base station, as in block 930.

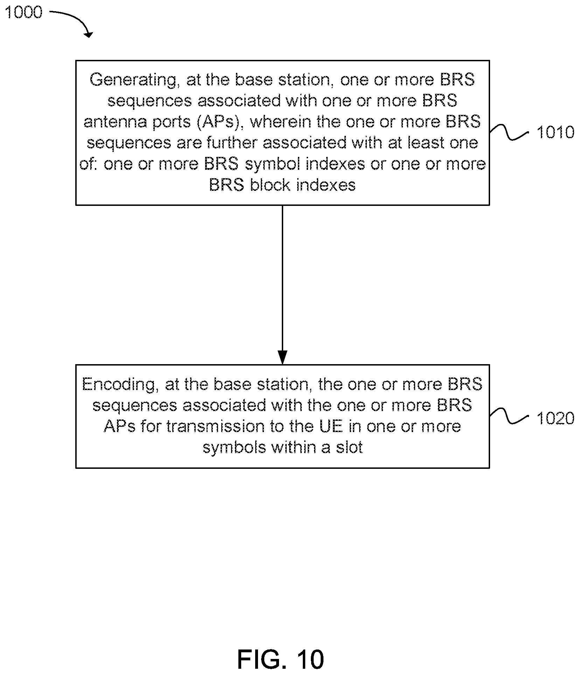

Another example provides at least one machine readable storage medium having instructions 1000 embodied thereon for providing beam reference signal (BRS) sequences from a base station to a user equipment (UE), as shown in FIG. 10. The instructions can be executed on a machine, where the instructions are included on at least one computer readable medium or at least one non-transitory machine readable storage medium. The instructions when executed by one or more processors perform: generating, at the base station, one or more BRS sequences associated with one or more BRS antenna ports (APs), wherein the one or more BRS sequences are further associated with at least one of: one or more BRS symbol indexes or one or more BRS block indexes, as in block 1010. The instructions when executed by one or more processors perform: encoding, at the base station, the one or more BRS sequences associated with the one or more BRS APs for transmission to the UE in one or more symbols within a slot, as in block 1020.

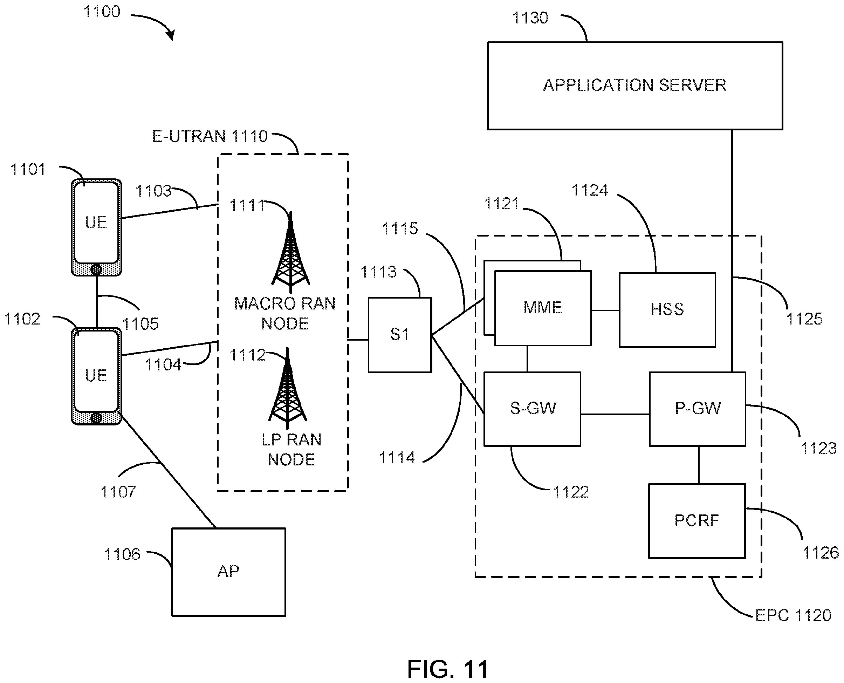

FIG. 11 illustrates an architecture of a wireless network with various components of the network in accordance with some embodiments. A system 1100 is shown to include a user equipment (UE) 1101 and a UE 1102. The UEs 1101 and 1102 are illustrated as smartphones (i.e., handheld touchscreen mobile computing devices connectable to one or more cellular networks), but may also comprise any mobile or non-mobile computing device, such as Personal Data Assistants (PDAs), pagers, laptop computers, desktop computers, wireless handsets, or any computing device including a wireless communications interface. In some embodiments, any of the UEs 1101 and 1102 can comprise an Internet of Things (IoT) UE, which can comprise a network access layer designed for low-power IoT applications utilizing short-lived UE connections. An IoT UE can utilize technologies such as machine-to-machine (M2M) or machine-type communications (MTC) for (machine initiated) exchanging data with an MTC server and/or device via a public land mobile network (PLMN), Proximity-Based Service (ProSe) or device-to-device (D2D) communication, sensor networks, or IoT networks. An IoT network describes interconnecting uniquely identifiable embedded computing devices (within the internet infrastructure) having short-lived connections, in addition to background applications (e.g., keep-alive messages, status updates, etc.) executed by the IoT UE.

The UEs 1101 and 1102 are configured to access a radio access network (RAN) - in this embodiment, an Evolved Universal Mobile Telecommunications System (UMTS) Terrestrial Radio Access Network (E-UTRAN) 1110. The UEs 1101 and 1102 utilize connections 1103 and 1104, respectively, each of which comprises a physical communications interface or layer (discussed in further detail below); in this example, the connections 1103 and 1104 are illustrated as an air interface to enable communicative coupling, and can be consistent with cellular communications protocols, such as a Global System for Mobile Communications (GSM) protocol, a code-division multiple access (CDMA) network protocol, a Push-to-Talk (PTT) protocol, a PTT over Cellular (POC) protocol, a Universal Mobile Telecommunications System (UMTS) protocol, a 3GPP Long Term Evolution (LTE) protocol, and the like.

In this embodiment, the UEs 1101 and 1102 may further directly exchange communication data via a ProSe interface 1105. The ProSe interface 1105 may alternatively be referred to as a sidelink interface comprising one or more logical channels, including but not limited to a Physical Sidelink Control Channel (PSCCH), a Physical Sidelink Shared Channel (PSSCH), a Physical Sidelink Discovery Channel (PSDCH), and a Physical Sidelink Broadcast Channel (PSBCH).

The UE 1102 is shown to be configured to access an access point (AP) 1106 via connection 1107. The connection 1107 can comprise a local wireless connection, such as a connection consistent with any IEEE 1102.11 protocol, wherein the AP 1106 would comprise a wireless fidelity (WiFi) router. In this example, the AP 1106 is shown to be connected to the Internet without connecting to the core network of the wireless system (described in further detail below).

The E-UTRAN 1110 can include one or more access points that enable the connections 1103 and 1104. These access points can be referred to as access nodes, base stations (BSs), NodeBs, eNodeBs, RAN nodes, RAN nodes, and so forth, and can comprise ground stations (i.e., terrestrial access points) or satellite access points providing coverage within a geographic area (i.e., a cell). The E-UTRAN 1110 may include one or more RAN nodes 1111 for providing macrocells and one or more RAN nodes 1112 for providing femtocells or picocells (i.e., cells having smaller coverage areas, smaller user capacity, and/or higher bandwidth compared to macrocells).

Any of the RAN nodes 1111 and 1112 can terminate the air interface protocol and can be the first point of contact for the UEs 1101 and 1102. In some embodiments, any of the RAN nodes 1111 and 1112 can fulfill various logical functions for the E-UTRAN 1110 including, but not limited to, radio network controller (RNC) functions such as radio bearer management, uplink and downlink dynamic radio resource management and data packet scheduling, and mobility management.

In accordance with some embodiments, the UEs 1101 and 1102 can be configured to communicate using Orthogonal Frequency-Division Multiplexing (OFDM) communication signals with each other or with any of the RAN nodes 1111 and 1112 over a multicarrier communication channel in accordance various communication techniques, such as an Orthogonal Frequency-Division Multiple Access (OFDMA) communication technique (e.g., for downlink communications) or a Single Carrier Frequency Division Multiple Access (SC-FDMA) communication technique (e.g., for uplink and ProSe or sidelink communications), although the scope of the embodiments is not limited in this respect. The OFDM signals can comprise a plurality of orthogonal subcarriers.

In some embodiments, a downlink resource grid can be used for downlink transmissions from any of the RAN nodes 1111 and 1112 to the UEs 1101 and 1102, while uplink transmissions can utilize similar techniques. The grid can be a time-frequency grid, called a resource grid or time-frequency resource grid, which is the physical resource in the downlink in each slot. Such a time-frequency plane representation is a common practice for OFDM systems, which makes it intuitive for radio resource allocation. Each column and each row of the resource grid corresponds to one OFDM symbol and one OFDM subcarrier, respectively. The duration of the resource grid in the time domain corresponds to one slot in a radio frame. The smallest time-frequency unit in a resource grid is denoted as a resource element. Each resource grid comprises a number of resource blocks, which describe the mapping of certain physical channels to resource elements. Each resource block comprises a collection of resource elements; in the frequency domain, this represents the smallest quantity of resources that currently can be allocated. There are several different physical downlink channels that are conveyed using such resource blocks.

The physical downlink shared channel (PDSCH) carries user data and higher-layer signaling to the UEs 1101 and 1102. The physical downlink control channel (PDCCH) carries information about the transport format and resource allocations related to the PDSCH channel, among other things. It also informs the UEs 1101 and 1102 about the transport format, resource allocation, and H-ARQ (Hybrid Automatic Repeat Request) information related to the uplink shared channel. Typically, downlink scheduling (assigning control and shared channel resource blocks to the UE 1102 within a cell) is performed at any of the RAN nodes 1111 and 1112 based on channel quality information fed back from any of the UEs 1101 and 1102, and then the downlink resource assignment information is sent on the PDCCH used for (i.e., assigned to) each of the UEs 1101 and 1102.

The PDCCH uses control channel elements (CCEs) to convey the control information. Before being mapped to resource elements, the PDCCH complex-valued symbols are first organized into quadruplets, which are then permuted using a sub-block inter-leaver for rate matching. Each PDCCH is transmitted using one or more of these CCEs, where each CCE corresponds to nine sets of four physical resource elements known as resource element groups (REGs). Four Quadrature Phase Shift Keying (QPSK) symbols are mapped to each REG. The PDCCH can be transmitted using one or more CCEs, depending on the size of the downlink control information (DCI) and the channel condition. There can be four or more different PDCCH formats defined in LTE with different numbers of CCEs (e.g., aggregation level, L=1, 2, 4, or 8).

The E-UTRAN 1110 is shown to be communicatively coupled to a core network - in this embodiment, an Evolved Packet Core (EPC) network 1120 via an S1 interface 1113. In this embodiment the S1 interface 1113 is split into two parts: the S1-U interface 1114, which carries traffic data between the RAN nodes 1111 and 1112 and the serving gateway (S-GW) 1122, and the S1-MME interface 1115, which is a signaling interface between the RAN nodes 1111 and 1112 and the mobility management entities (MMEs) 1121.

In this embodiment, the EPC network 1120 comprises the MMEs 1121, the S-GW 1122, the Packet Data Network (PDN) Gateway (P-GW) 1123, and a home subscriber server (HSS) 1124. The MMEs 1121 are similar in function to the control plane of legacy Serving General Packet Radio Service (GPRS) Support Nodes (SGSN). The MMEs 1121 manage mobility aspects in access such as gateway selection and tracking area list management. The HSS 1124 comprises a database for network users, including subscription-related information to support the network entities' handling of communication sessions. The EPC network 1120 may comprise one or several HSSs 1124, depending on the number of mobile subscribers, on the capacity of the equipment, on the organization of the network, etc. For example, the HSS 1124 can provide support for routing/roaming, authentication, authorization, naming/addressing resolution, location dependencies, etc.

The S-GW 1122 terminates the S1 interface 1113 towards the E-UTRAN 1110, and routes data packets between the E-UTRAN 1110 and the EPC network 1120. In addition, the S-GW 1122 may be a local mobility anchor point for inter-RAN node handovers and also may provide an anchor for inter-3GPP mobility. Other responsibilities may include lawful intercept, charging, and some policy enforcement.

The P-GW 1123 terminates an SGi interface toward a PDN. The P-GW 1123 routes data packets between the EPC network 1123 and external networks such as a network including the application server 1130 (alternatively referred to as application function (AF)) via an Internet Protocol (IP) interface 1125. Generally, the application server 1130 is an element offering applications that use IP bearer resources with the core network (e.g., UMTS Packet Services (PS) domain, LTE PS data services, etc.). In this embodiment, the P-GW 1123 is shown to be communicatively coupled to an application server 1130 via an IP communications interface 1125. The application server 1130 can also be configured to support one or more communication services (e.g., Voice-over-Internet Protocol (VoIP) sessions, PTT sessions, group communication sessions, social networking services, etc.) for the UEs 1101 and 1102 via the EPC network 1120.

The P-GW 1123 may further be a node for policy enforcement and charging data collection. Policy and Charging Enforcement Function (PCRF) 1126 is the policy and charging control element of the EPC network 1120. In a non-roaming scenario, there may be a single PCRF in the Home Public Land Mobile Network (HPLMN) associated with a User Equipment's (UE) Internet Protocol Connectivity Access Network (IP-CAN) session. In a roaming scenario with local breakout of traffic, there may be two PCRFs associated with a UE's IP-CAN session: a Home PCRF (H-PCRF) within a HPLMN and a Visited PCRF (V-PCRF) within a Visited Public Land Mobile Network (VPLMN). The PCRF 1126 may be communicatively coupled to the application server 1130 via the P-GW 1123. The application server 1130 may signal the PCRF 1126 to indicate a new service flow and selecting the appropriate Quality of Service (QoS) and charging parameters. The PCRF 1126 may provision this rule into a Policy and Charging Enforcement Function (PCEF) (not shown) with the appropriate traffic flow template (TFT) and QoS class of identifier (QCI), which commences the QoS and charging as specified by the application server.

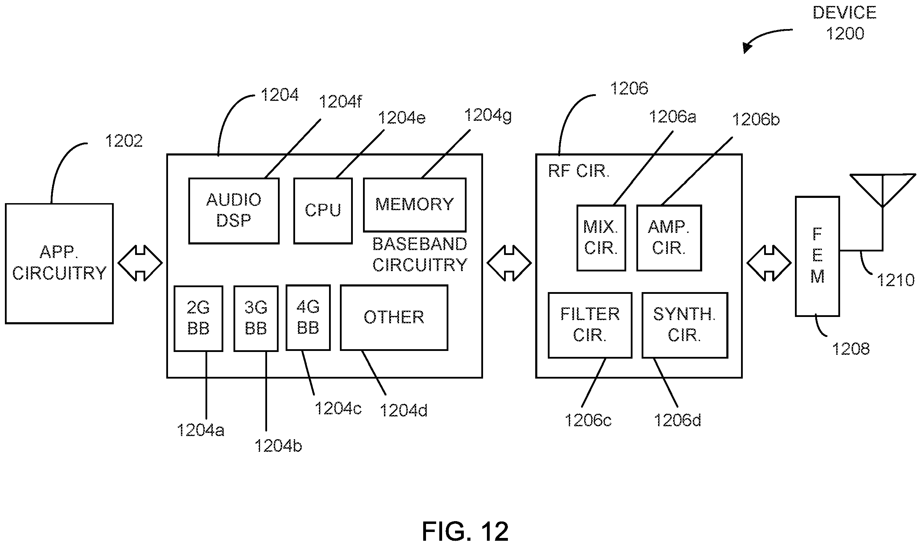

FIG. 12 illustrates example components of a device in accordance with some embodiments. In some embodiments, the device 1200 may include application circuitry 1202, baseband circuitry 1204, Radio Frequency (RF) circuitry 1206, front-end module (FEM) circuitry 1208, and one or more antennas 1210, coupled together at least as shown. The components of the illustrated device 1200 may be included a UE or a RAN node. In some embodiments, the device 1200 may include less elements (e.g., a RAN node may not utilize application circuitry 1202, and instead include a processor/controller to process IP data received from an EPC). In some embodiments, the device 1200 may include additional elements such as, for example, memory/storage, display, camera, sensor, and/or input/output (I/O) interface. In other embodiments, the components described below may be included in more than one device (e.g., said circuitries may be separately included in more than one device for Cloud-RAN (C-RAN) implementations).

The application circuitry 1202 may include one or more application processors. For example, the application circuitry 1202 may include circuitry such as, but not limited to, one or more single-core or multi-core processors. The processor(s) may include any combination of general-purpose processors and dedicated processors (e.g., graphics processors, application processors, etc.). The processors may be coupled with and/or may include memory/storage and may be configured to execute instructions stored in the memory/storage to enable various applications and/or operating systems to run on the system. In some embodiments, processors of application circuitry 1202 may process IP data packets received from an EPC.

The baseband circuitry 1204 may include circuitry such as, but not limited to, one or more single-core or multi-core processors. The baseband circuitry 1204 may include one or more baseband processors and/or control logic to process baseband signals received from a receive signal path of the RF circuitry 1206 and to generate baseband signals for a transmit signal path of the RF circuitry 1206. Baseband processing circuity 1204 may interface with the application circuitry 1202 for generation and processing of the baseband signals and for controlling operations of the RF circuitry 1206. For example, in some embodiments, the baseband circuitry 1204 may include a second generation (2G) baseband processor 1204a, third generation (3G) baseband processor 1204b, fourth generation (4G) baseband processor 1204c, and/or other baseband processor(s) 1204d for other existing generations, generations in development or to be developed in the future (e.g., fifth generation (5G), 6G, etc.). The baseband circuitry 1204 (e.g., one or more of baseband processors 1204a-d) may handle various radio control functions that enable communication with one or more radio networks via the RF circuitry 1206. In other embodiments, some or all of the functionality of baseband processors 1204a-d may be included in modules stored in the memory 1204g and executed via a Central Processing Unit (CPU) 1204e. The radio control functions may include, but are not limited to, signal modulation/demodulation, encoding/decoding, radio frequency shifting, etc. In some embodiments, modulation/demodulation circuitry of the baseband circuitry 1204 may include Fast-Fourier Transform (FFT), precoding, and/or constellation mapping/demapping functionality. In some embodiments, encoding/decoding circuitry of the baseband circuitry 1204 may include convolution, tailbiting convolution, turbo, Viterbi, and/or Low Density Parity Check (LDPC) encoder/decoder functionality. Embodiments of modulation/demodulation and encoder/decoder functionality are not limited to these examples and may include other suitable functionality in other embodiments.

In some embodiments, the baseband circuitry may include one or more audio digital signal processor(s) (DSP) 1204f. The audio DSP(s) 1204f may be include elements for compression/decompression and echo cancellation and may include other suitable processing elements in other embodiments. Components of the baseband circuitry may be suitably combined in a single chip, a single chipset, or disposed on a same circuit board in some embodiments. In some embodiments, some or all of the constituent components of the baseband circuitry 1204 and the application circuitry 1202 may be implemented together such as, for example, on a system on a chip (SOC).

In some embodiments, the baseband circuitry 1204 may provide for communication compatible with one or more radio technologies. For example, in some embodiments, the baseband circuitry 1204 may support communication with an evolved universal terrestrial radio access network (EUTRAN) and/or other wireless metropolitan area networks (WMAN), a wireless local area network (WLAN), a wireless personal area network (WPAN). Embodiments in which the baseband circuitry 1204 is configured to support radio communications of more than one wireless protocol may be referred to as multi-mode baseband circuitry.

RF circuitry 1206 may enable communication with wireless networks using modulated electromagnetic radiation through a non-solid medium. In various embodiments, the RF circuitry 1206 may include switches, filters, amplifiers, etc. to facilitate the communication with the wireless network. RF circuitry 1206 may include a receive signal path which may include circuitry to down-convert RF signals received from the FEM circuitry 1208 and provide baseband signals to the baseband circuitry 1204. RF circuitry 1206 may also include a transmit signal path which may include circuitry to up-convert baseband signals provided by the baseband circuitry 1204 and provide RF output signals to the FEM circuitry 1208 for transmission.

In some embodiments, the RF circuitry 1206 may include a receive signal path and a transmit signal path. The receive signal path of the RF circuitry 1206 may include mixer circuitry 1206a, amplifier circuitry 1206b and filter circuitry 1206c. The transmit signal path of the RF circuitry 1206 may include filter circuitry 1206c and mixer circuitry 1206a. RF circuitry 1206 may also include synthesizer circuitry 1206d for synthesizing a frequency for use by the mixer circuitry 1206a of the receive signal path and the transmit signal path. In some embodiments, the mixer circuitry 1206a of the receive signal path may be configured to down-convert RF signals received from the FEM circuitry 1208 based on the synthesized frequency provided by synthesizer circuitry 1206d. The amplifier circuitry 1206b may be configured to amplify the down-converted signals and the filter circuitry 1206c may be a low-pass filter (LPF) or band-pass filter (BPF) configured to remove unwanted signals from the down-converted signals to generate output baseband signals. Output baseband signals may be provided to the baseband circuitry 1204 for further processing. In some embodiments, the output baseband signals may be zero-frequency baseband signals. In some embodiments, mixer circuitry 1206a of the receive signal path may comprise passive mixers, although the scope of the embodiments is not limited in this respect.

In some embodiments, the mixer circuitry 1206a of the transmit signal path may be configured to up-convert input baseband signals based on the synthesized frequency provided by the synthesizer circuitry 1206d to generate RF output signals for the FEM circuitry 1208. The baseband signals may be provided by the baseband circuitry 1204 and may be filtered by filter circuitry 1206c. The filter circuitry 1206c may include a low-pass filter (LPF), although the scope of the embodiments is not limited in this respect.

In some embodiments, the mixer circuitry 1206a of the receive signal path and the mixer circuitry 1206a of the transmit signal path may include two or more mixers and may be arranged for quadrature downconversion and/or upconversion respectively. In some embodiments, the mixer circuitry 1206a of the receive signal path and the mixer circuitry 1206a of the transmit signal path may include two or more mixers and may be arranged for image rejection (e.g., Hartley image rejection). In some embodiments, the mixer circuitry 1206a of the receive signal path and the mixer circuitry 1206a may be arranged for direct downconversion and/or direct upconversion, respectively. In some embodiments, the mixer circuitry 1206a of the receive signal path and the mixer circuitry 1206a of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 1206 may include analog-to-digital converter (ADC) and digital-to-analog converter (DAC) circuitry and the baseband circuitry 1204 may include a digital baseband interface to communicate with the RF circuitry 1206.

In some dual-mode embodiments, a separate radio IC circuitry may be provided for processing signals for each spectrum, although the scope of the embodiments is not limited in this respect.

In some embodiments, the synthesizer circuitry 1206d may be a fractional-N synthesizer or a fractional N/N+1 synthesizer, although the scope of the embodiments is not limited in this respect as other types of frequency synthesizers may be suitable. For example, synthesizer circuitry 1206d may be a delta-sigma synthesizer, a frequency multiplier, or a synthesizer comprising a phase-locked loop with a frequency divider.

The synthesizer circuitry 1206d may be configured to synthesize an output frequency for use by the mixer circuitry 1206a of the RF circuitry 1206 based on a frequency input and a divider control input. In some embodiments, the synthesizer circuitry 1206d may be a fractional N/N+1 synthesizer.

In some embodiments, frequency input may be provided by a voltage controlled oscillator (VCO). Divider control input may be provided by either the baseband circuitry 1204 or the applications processor 1202 depending on the desired output frequency. In some embodiments, a divider control input (e.g., N) may be determined from a look-up table based on a channel indicated by the applications processor 1202.

Synthesizer circuitry 1206d of the RF circuitry 1206 may include a divider, a delay-locked loop (DLL), a multiplexer and a phase accumulator. In some embodiments, the divider may be a dual modulus divider (DMD) and the phase accumulator may be a digital phase accumulator (DPA). In some embodiments, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump and a D-type flip-flop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some embodiments, synthesizer circuitry 1206d may be configured to generate a carrier frequency as the output frequency, while in other embodiments, the output frequency may be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency may be a LO frequency (fLO). In some embodiments, the RF circuitry 1206 may include an IQ/polar converter.

FEM circuitry 1208 may include a receive signal path which may include circuitry configured to operate on RF signals received from one or more antennas 1210, amplify the received signals and provide the amplified versions of the received signals to the RF circuitry 1206 for further processing. FEM circuitry 1208 may also include a transmit signal path which may include circuitry configured to amplify signals for transmission provided by the RF circuitry 1206 for transmission by one or more of the one or more antennas 1210.

In some embodiments, the FEM circuitry 1208 may include a TX/RX switch to switch between transmit mode and receive mode operation. The FEM circuitry may include a receive signal path and a transmit signal path. The receive signal path of the FEM circuitry may include a low-noise amplifier (LNA) to amplify received RF signals and provide the amplified received RF signals as an output (e.g., to the RF circuitry 1206). The transmit signal path of the FEM circuitry 1208 may include a power amplifier (PA) to amplify input RF signals (e.g., provided by RF circuitry 1206), and one or more filters to generate RF signals for subsequent transmission (e.g., by one or more of the one or more antennas 1210.

In some embodiments, the device 1200 comprises a plurality of power saving mechanisms. If the device 1200 is in an RRC_Connected state, where it is still connected to the RAN node as it expects to receive traffic shortly, then it may enter a state known as Discontinuous Reception Mode (DRX) after a period of inactivity. During this state, the device may power down for brief intervals of time and thus save power.

If there is no data traffic activity for an extended period of time, then the device 1200 may transition off to an RRC_Idle state, where it disconnects from the network and does not perform operations such as channel quality feedback, handover, etc. The device 1200 goes into a very low power state and it performs paging where again it periodically wakes up to listen to the network and then powers down again. The device cannot receive data in this state, in order to receive data, it must transition back to RRC_Connected state.

An additional power saving mode may allow a device to be unavailable to the network for periods longer than a paging interval (ranging from seconds to a few hours). During this time, the device is totally unreachable to the network and may power down completely. Any data sent during this time incurs a large delay and it is assumed the delay is acceptable.

Processors of the application circuitry 1202 and processors of the baseband circuitry 1204 may be used to execute elements of one or more instances of a protocol stack. For example, processors of the baseband circuitry 1204, alone or in combination, may be used execute Layer 3, Layer 2, and/or Layer 1 functionality, while processors of the application circuitry 1204 may utilize data (e.g., packet data) received from these layers and further execute Layer 4 functionality (e.g., transmission communication protocol (TCP) and user datagram protocol (UDP) layers). As referred to herein, Layer 3 may comprise a radio resource control (RRC) layer, described in further detail below. As referred to herein, Layer 2 may comprise a medium access control (MAC) layer, a radio link control (RLC) layer, and a packet data convergence protocol (PDCP) layer, described in further detail below. As referred to herein, Layer 1 may comprise a physical (PHY) layer of a UE/RAN node, described in further detail below.

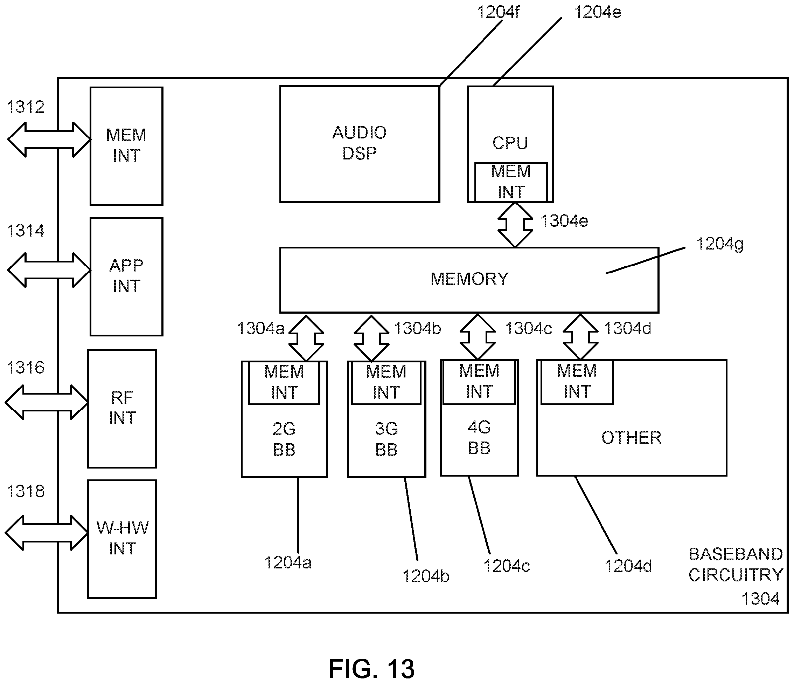

FIG. 13 illustrates example interfaces of baseband circuitry in accordance with some embodiments. As discussed above, the baseband circuitry 1204 of FIG. 12 may comprise processors 1204a-1204e and a memory 1204g utilized by said processors. Each of the processors 1204a-1204e may include a memory interface, 1304a-1304e, respectively, to send/receive data to/from the memory 1204g.

The baseband circuitry 1204 may further include one or more interfaces to communicatively couple to other circuitries/devices, such as a memory interface 1312 (e.g., an interface to send/receive data to/from memory external to the baseband circuitry 1204), an application circuitry interface 1314 (e.g., an interface to send/receive data to/from the application circuitry 1202 of FIG. 12), an RF circuitry interface 1316 (e.g., an interface to send/receive data to/from RF circuitry 1206 of FIG. 12), and a wireless hardware connectivity interface 1318 (e.g., an interface to send/receive data to/from Near Field Communication (NFC) components, Bluetooth® components (e.g., Bluetooth® Low Energy), Wi-Fi® components, and other communication components).

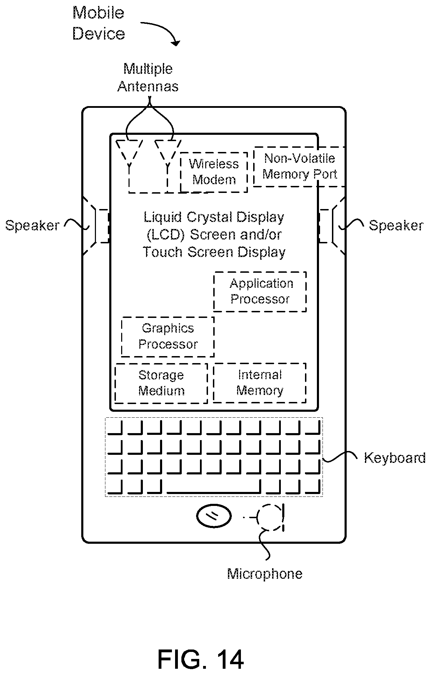

FIG. 14 provides an example illustration of the wireless device, such as a user equipment (UE), a mobile station (MS), a mobile wireless device, a mobile communication device, a tablet, a handset, or other type of wireless device. The wireless device can include one or more antennas configured to communicate with a node, macro node, low power node (LPN), or, transmission station, such as a base station (BS), an evolved Node B (eNB), a baseband processing unit (BBU), a remote radio head (RRH), a remote radio equipment (RRE), a relay station (RS), a radio equipment (RE), or other type of wireless wide area network (WWAN) access point. The wireless device can be configured to communicate using at least one wireless communication standard such as, but not limited to, 3GPP LTE, WiMAX, High Speed Packet Access (HSPA), Bluetooth, and WiFi. The wireless device can communicate using separate antennas for each wireless communication standard or shared antennas for multiple wireless communication standards. The wireless device can communicate in a wireless local area network (WLAN), a wireless personal area network (WPAN), and/or a WWAN. The wireless device can also comprise a wireless modem. The wireless modem can comprise, for example, a wireless radio transceiver and baseband circuitry (e.g., a baseband processor). The wireless modem can, in one example, modulate signals that the wireless device transmits via the one or more antennas and demodulate signals that the wireless device receives via the one or more antennas.

FIG. 14 also provides an illustration of a microphone and one or more speakers that can be used for audio input and output from the wireless device. The display screen can be a liquid crystal display (LCD) screen, or other type of display screen such as an organic light emitting diode (OLED) display. The display screen can be configured as a touch screen. The touch screen can use capacitive, resistive, or another type of touch screen technology. An application processor and a graphics processor can be coupled to internal memory to provide processing and display capabilities. A non-volatile memory port can also be used to provide data input/output options to a user. The non-volatile memory port can also be used to expand the memory capabilities of the wireless device. A keyboard can be integrated with the wireless device or wirelessly connected to the wireless device to provide additional user input. A virtual keyboard can also be provided using the touch screen.

Various techniques, or certain aspects or portions thereof, may take the form of program code (i.e., instructions) embodied in tangible media, such as floppy diskettes, compact disc-read-only memory (CD-ROMs), hard drives, non-transitory computer readable storage medium, or any other machine-readable storage medium wherein, when the program code is loaded into and executed by a machine, such as a computer, the machine becomes an apparatus for practicing the various techniques. In the case of program code execution on programmable computers, the computing device may include a processor, a storage medium readable by the processor (including volatile and non-volatile memory and/or storage elements), at least one input device, and at least one output device. The volatile and non-volatile memory and/or storage elements may be a random-access memory (RAM), erasable programmable read only memory (EPROM), flash drive, optical drive, magnetic hard drive, solid state drive, or other medium for storing electronic data. The node and wireless device may also include a transceiver module (i.e., transceiver), a counter module (i.e., counter), a processing module (i.e., processor), and/or a clock module (i.e., clock) or timer module (i.e., timer). In one example, selected components of the transceiver module can be located in a cloud radio access network (C-RAN). One or more programs that may implement or utilize the various techniques described herein may use an application programming interface (API), reusable controls, and the like. Such programs may be implemented in a high level procedural or object oriented programming language to communicate with a computer system. However, the program(s) may be implemented in assembly or machine language, if desired. In any case, the language may be a compiled or interpreted language, and combined with hardware implementations.

As used herein, the term "circuitry" may refer to, be part of, or include an Application Specific Integrated Circuit (ASIC), an electronic circuit, a processor (shared, dedicated, or group), and/or memory (shared, dedicated, or group) that execute one or more software or firmware programs, a combinational logic circuit, and/or other suitable hardware components that provide the described functionality. In some embodiments, the circuitry may be implemented in, or functions associated with the circuitry may be implemented by, one or more software or firmware modules. In some embodiments, circuitry may include logic, at least partially operable in hardware.

It should be understood that many of the functional units described in this specification have been labeled as modules, in order to more particularly emphasize their implementation independence. For example, a module may be implemented as a hardware circuit comprising custom very-large-scale integration (VLSI) circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in software for execution by various types of processors. An identified module of executable code may, for instance, comprise one or more physical or logical blocks of computer instructions, which may, for instance, be organized as an object, procedure, or function. Nevertheless, the executables of an identified module may not be physically located together, but may comprise disparate instructions stored in different locations which, when joined logically together, comprise the module and achieve the stated purpose for the module.

Indeed, a module of executable code may be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different storage devices, and may exist, at least partially, merely as electronic signals on a system or network. The modules may be passive or active, including agents operable to perform desired functions.

Reference throughout this specification to "an example" or "exemplary" means that a particular feature, structure, or characteristic described in connection with the example is included in at least one embodiment of the present technology. Thus, appearances of the phrases "in an example" or the word "exemplary" in various places throughout this specification are not necessarily all referring to the same embodiment.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present technology may be referred to herein along with alternatives for the various components thereof. It is understood that such embodiments, examples, and alternatives are not to be construed as defacto equivalents of one another, but are to be considered as separate and autonomous representations of the present technology.

Furthermore, the described features, structures, or characteristics may be combined in any suitable manner in one or more embodiments. In the following description, numerous specific details are provided, such as examples of layouts, distances, network examples, etc., to provide a thorough understanding of embodiments of the technology. One skilled in the relevant art will recognize, however, that the technology can be practiced without one or more of the specific details, or with other methods, components, layouts, etc. In other instances, well-known structures, materials, or operations are not shown or described in detail to avoid obscuring aspects of the technology.

While the forgoing examples are illustrative of the principles of the present technology in one or more particular applications, it will be apparent to those of ordinary skill in the art that numerous modifications in form, usage and details of implementation can be made without the exercise of inventive faculty, and without departing from the principles and concepts of the technology. Accordingly, it is not intended that the technology be limited, except as by the claims set forth below.

## Claims

1. An apparatus of a base station (1111) operable to provide beam reference signal, BRS, sequences for a user equipment, UE (1101, 1102), the base station (1111) comprising:

   one or more processors configured to:

      generate, at the base station (1111), BRS sequences associated with BRS antenna ports, APs, wherein the BRS sequences are further associated with at least one of one or more BRS symbol indexes or one or more BRS block indexes;
      encode, at the base station (1111), the BRS sequences associated with the BRS APs for transmission to the UE (1101, 1102) in one or more symbols within a slot; and

   memory interfaced with the one or more processors, wherein the memory is configured to store the BRS sequences;
   **characterized in that**
   the processors are further configured to generate the BRS sequences to be orthogonal or pseudo-orthogonal to BRS sequences generated by neighboring base stations (1112) to reduce inter-cell interference between the base station (1111) and the neighboring base stations (1112), wherein the BRS sequences are orthogonal when different cyclic shift values are applied to the BRS sequences, or the BRS sequences are pseudo-orthogonal when different root sequences or root indexes are used for the BRS sequences;
wherein the cyclic shift values are defined as a function of one or more of:

a BRS AP index, a block index or a symbol index for each BRS AP; and
wherein the root indexes are defined as a function of one or more of: a physical cell identifier, ID, a virtual cell ID, or a symbol index within the slot.

2. The apparatus of claim 1, further comprising a transceiver configured to transmit, to the UE (1101, 1102), the BRS sequences associated with the BRS APs in the one or more symbols within the slot.

3. The apparatus of claim 1 or 2, wherein the one or more processors are further configured to generate the BRS sequences based on Zadoff-Chu, ZC, sequences, maximum length, M, sequences or Hadamard sequences.

4. The apparatus of claim 1, wherein the one or more processors are further configured to encode the BRS sequences for transmission on different resources as compared to neighboring base stations (1112) to reduce inter-cell interference between the base station (1111) and the neighboring base stations (1112).

5. The apparatus of claim 1, wherein the one or more processors are further configured to encode the BRS sequences for transmission using a defined set of resources, and the defined set of resources is a function of a physical cell identifier, ID, when the BRS APs that are supported by the base station (1111) is a number that is less than a maximum number of BRS APs.

6. The apparatus of claim 1, wherein the one or more processors are further configured to encode the BRS sequences for transmission using a defined set of resources, and the defined set of resources is defined by $n_{group} = (N_{ID}^{cell})mod(N_{group})$, wherein $n_{group}$ is a group index in each BRS block, $N_{ID}^{cell}$ is a physical cell identifier, ID, and $N_{group}$ is a number of groups in each BRS block.

7. At least one machine readable storage medium having instructions embodied thereon that, when executed by one or more processors of a bases station (1111), cause the base station (1111) to provide beam reference signal, BRS, sequences to a user equipment, UE (1101, 1102), by performing the following:

generating BRS sequences associated with BRS antenna ports, APs,
wherein the BRS sequences are further associated with at least one of:

one or more BRS symbol indexes or one or more BRS block indexes;
encoding, at the base station (1111), the BRS sequences associated with the BRS APs for transmission to the UE (1101, 1102) in one or more symbols within a slot;
**characterized in that**
execution of the instructions by the one or more processors further cause
the base station (1111) to generate the BRS sequences to be orthogonal or pseudo-orthogonal to BRS sequences generated by neighboring base stations (1112) to reduce inter-cell interference between the base station (1111) and
the neighboring base stations (1112), wherein the BRS sequences are orthogonal when different cyclic shift values are applied to the BRS sequences, or the BRS sequences are pseudo-orthogonal when different root sequences or root indexes are used for the BRS sequences;
wherein the cyclic shift values are defined as a function of one or more of:

a BRS AP index, a block index or a symbol index for each BRS AP; and
wherein the root indexes are defined as a function of one or more of: a physical cell identifier, ID, a virtual cell ID, or a symbol index within the slot.

8. The at least one machine readable storage medium of 7, further comprising instructions when executed cause the base station (1111) to perform the following: transmitting, to the UE (1101, 1102), the BRS sequences associated with the BRS APs in the one or more symbols within the slot.

9. The at least one machine readable storage medium of 7 or 8, wherein the BRS sequences is generated based on Zadoff-Chu, ZC, sequences, maximum length, M, sequences or Hadamard sequences.

10. The at least one machine readable storage medium of 7, further comprising instructions when executed cause the base station (1111) to perform the following: encoding the BRS sequences for transmission on different resources as compared to neighboring base stations (1112) to reduce inter-cell interference between the base station (1111) and the neighboring base stations (1112).

**11.** The at least one machine readable storage medium of 7, further comprising instructions when executed cause the base station (1111) to perform the following: encoding the BRS sequences for transmission using a defined set of resources, and the defined set of resources is a function of a physical cell identifier, ID, when the BRS APs that are supported by the base station (1111) is a number that is less than a maximum number of BRS APs.

**12.** The at least one machine readable storage medium of 7, further comprising instructions when executed cause the base station (1111) to perform the following: encoding the BRS sequences for transmission using a defined set of resources, and the defined set of resources is defined by

$$n_{group} = (N_{ID}^{cell}) mod(N_{group}),$$ wherein

$n_{group}$ is a group index in each BRS block, $N_{ID}^{cell}$ is a physical cell identifier, ID, and $N_{group}$ is a number of groups in each BRS block.

**Patentansprüche**

**1.** Vorrichtung einer Basisstation (1111), die zum Bereitstellen von Folgen von Strahlreferenzsignalen, BRS, für ein Benutzer-Equipment, UE, (1101, 1102) ausgelegt ist, wobei die Basisstation (1111) aufweist:

einen oder mehrere Prozessoren, die konfiguriert sind zum:

Erzeugen von BRS-Folgen, die mit BRS-Antennenanschlüssen, AP, assoziiert sind, an der Basisstation (1111), wobei die BRS-Folgen ferner mit mindestens einem von einem oder mehreren BRS-Symbolindizes oder einem oder mehreren BRS-Blockindizes assoziiert sind; Codieren der mit den BRS-APs assoziierten BRS-Folgen an der Basisstation (1111) zur Übertragung in einem oder mehreren Symbolen innerhalb eines Schlitzes an das UE (1101, 1102); und

Speicher, der über eine Schnittstelle mit dem einen oder den mehreren Prozessoren verbunden ist, wobei der Speicher zum Speichern der BRS-Folgen konfiguriert ist; **dadurch gekennzeichnet, dass** die Prozessoren ferner so konfiguriert sind, dass sie die BRS-Folgen so erzeugen, dass sie orthogonal oder pseudoorthogonal zu BRS-Folgen sind, die von benachbarten Basisstationen (1112) erzeugt werden, um interzellulare Interferenz zwischen der Basisstation (1111) und den benachbarten Basisstationen (1112) zu reduzieren, wobei die BRS-Folgen orthogonal sind, wenn verschiedene Werte zyklischer Verschiebung auf die BRS-Folgen angewendet werden, oder die BRS-Folgen pseudoorthogonal sind, wenn verschiedene Wurzelfolgen oder Wurzelindizes für die BRS-Folgen verwendet werden;
wobei die Werte zyklischer Verschiebung als eine Funktion eines oder mehrerer definiert sind von: einem BRS-AP-Index, einem Blockindex oder einem Symbolindex für jeden BRS-AP; und wobei die Wurzelindizes als eine Funktion eines oder mehrerer definiert sind von: einer Kennung, ID, einer physischen Zelle, einer ID einer virtuellen Zelle oder einem Symbolindex innerhalb eines Schlitzes.

**2.** Vorrichtung nach Anspruch 1, ferner aufweisend einen Sendeempfänger, der zum Senden der mit den BRS-APs assoziierten BRS-Folgen in dem einen oder den mehreren Symbolen innerhalb des Schlitzes an das UE (1101, 1102) konfiguriert ist.

**3.** Vorrichtung nach Anspruch 1 oder 2, wobei der eine oder die mehreren Prozessoren ferner zum Erzeugen der BRS-Folgen basierend auf Zadoff-Chu-, ZC-, Folgen, Folgen maximaler Länge, M, oder Hadamard-Folgen konfiguriert sind.

**4.** Verfahren nach Anspruch 1, wobei der eine oder die mehreren Prozessoren ferner so konfiguriert sind, dass sie die BRS-Folgen zur Übertragung auf anderen Ressourcen als benachbarte Basisstationen (1112) codieren, um intrazellulare Interferenz zwischen der Basisstation (1111) und den benachbarten Basisstationen (1112) zu reduzieren.

**5.** Verfahren nach Anspruch 1, wobei der eine oder die mehreren Prozessoren ferner so konfiguriert sind, dass sie die BRS-Folgen zur Übertragung unter Verwendung eines definierten Satzes von Ressourcen codieren, wobei der definierte Satz von Ressourcen eine Funktion einer Kennung, ID, einer physischen Zelle ist, wenn die BRS-APs, die von der Basisstation (1111) unterstützt werden, von einer Anzahl sind, die kleiner als eine maximale Anzahl von BRS-APs ist.

**6.** Verfahren nach Anspruch 1, wobei der eine oder die mehreren Prozessoren ferner so konfiguriert sind, dass sie die BRS-Folgen zur Übertragung unter Verwendung eines definierten Satzes von Ressourcen codieren, und der definierte Satz von Ressourcen

durch $n_{group} = (N_{ID}^{cell}) mod(N_{group})$ definiert ist, wobei $n_{group}$ ein Gruppenindex in jedem BRS-Block ist, $(N_{ID}^{cell})$ eine Kennung, ID, einer physischen Zelle ist, und $N_{group}$ eine Anzahl von Gruppen in jedem BRS-Block ist.

7. Mindestens ein maschinenlesbares Speichermedium, das Anweisungen darauf enthalten aufweist, die bei Ausführung durch einen oder mehrere Prozessoren einer Basisstation (1111) die Basisstation (1111) veranlassen, Folgen von Strahlreferenzsignalen, BRS, für ein Benutzer-Equipment, UE, (1101, 1102) durch Durchführen von Folgendem bereitzustellen:

> Erzeugen von BRS-Folgen, die mit BRS-Antennenanschlüssen, AP, assoziiert sind, wobei die BRS-Folgen ferner mit mindestens einem assoziiert sind von: einem oder mehreren BRS-Indizes oder einem oder mehreren von BRS-Blockindizes;
> Codieren der mit den BRS-APs assoziierten BRS-Folgen an der Basisstation (1111) zur Übertragung in einem oder mehreren Symbolen innerhalb eines Schlitzes an das UE (1101, 1102);
> **dadurch gekennzeichnet, dass**
> die Ausführung der Anweisungen durch den einen oder die mehreren Prozessoren die Basisstation (1111) ferner veranlasst, die BRS-Folgen so erzeugen, dass sie orthogonal oder pseudoorthogonal zu BRS-Folgen sind, die von benachbarten Basisstationen (1112) erzeugt werden, um interzellulare Interferenz zwischen der Basisstation (1111) und den benachbarten Basisstationen (1112) zu reduzieren, wobei die BRS-Folgen orthogonal sind, wenn verschiedene Werte zyklischer Verschiebung auf die BRS-Folgen angewendet werden, oder die BRS-Folgen pseudoorthogonal sind, wenn verschiedene Wurzelfolgen oder Wurzelindizes für die BRS-Folgen verwendet werden;
> wobei die Werte zyklischer Verschiebung als eine Funktion eines oder mehrerer definiert sind von: einem BRS-AP-Index, einem Blockindex oder einem Symbolindex für jeden BRS-AP; und
> wobei die Wurzelindizes als eine Funktion eines oder mehrerer definiert sind von: einer Kennung, ID, einer physischen Zelle, einer ID einer virtuellen Zelle oder einem Symbolindex innerhalb eines Schlitzes.

8. Mindestens ein maschinenlesbares Speichermedium nach Anspruch 7, ferner aufweisend Anweisungen, die bei Ausführung die Basisstation (1111) zum Durchführen von Folgendem veranlassen: Senden der mit den BRS-APs assoziierten BRS-Folgen in dem einen oder den mehreren Symbolen innerhalb des Schlitzes an das UE (1101, 1102).

9. Mindestens ein maschinenlesbares Speichermedium nach Anspruch 7 oder 8, wobei die BRS-Folgen basierend auf Zadoff-Chu-,ZC,Folgen, Folgen maximaler Länge, M, oder Hadamard-Folgen erzeugt werden.

10. Mindestens ein maschinenlesbares Speichermedium nach Anspruch 7, ferner aufweisend Anweisungen, die bei Ausführung die Basisstation (1111) zum Durchführen von Folgendem veranlassen: Codieren der BRS-Folgen zur Übertragung auf anderen Ressourcen als benachbarte Basisstationen (1112), um intrazellulare Interferenz zwischen der Basisstation (1111) und den benachbarten Basisstationen (1112) zu reduzieren.

11. Mindestens ein maschinenlesbares Speichermedium nach Anspruch 7, ferner aufweisend Anweisungen, die bei Ausführung die Basisstation (1111) zum Durchführen von Folgendem veranlassen: Codieren der BRS-Folgen zur Übertragung unter Verwendung eines definierten Satzes von Ressourcen, und wobei der definierte Satz von Ressourcen eine Funktion einer Kennung, ID, einer physischen Zelle ist, wenn die BRS-APs, die von der Basisstation (1111) unterstützt werden, von einer Anzahl sind, die kleiner als eine maximale Anzahl von BRS-APs ist.

12. Mindestens ein maschinenlesbares Speichermedium nach Anspruch 7, ferner aufweisend Anweisungen, die bei Ausführung die Basisstation (1111) zum Durchführen von Folgendem veranlassen: Codieren der BRS-Folgen zur Übertragung unter Verwendung eines definierten Satzes von Ressourcen, und wobei der definierte Satz von Ressourcen durch

$$n_{group} = (N_{ID}^{cell}) mod(N_{group})$$

definiert ist, wobei $n_{group}$ ein Gruppenindex in jedem BRS-Block ist, $(N_{ID}^{cell})$ eine Kennung, ID, einer physischen Zelle ist, und $N_{group}$ eine Anzahl von Gruppen in jedem BRS-Block ist.

**Revendications**

1. Appareil formant station de base (1111) pouvant être mis en œuvre pour fournir des séquences de signal de référence de faisceau, BRS, pour un équipement utilisateur, UE (1101, 1102), la station de base (1111) comprenant :

un ou plusieurs processeurs configurés pour :

générer, au niveau de la station de base (1111), des séquences de signal BRS associées à des ports d'antennes, AP, pour signal BRS les séquences de signal BRS étant en outre associées avec au moins un ou plusieurs index de symboles de signal BRS ou avec un ou plusieurs index de blocs de signal BRS,

coder, au niveau de la station de base (1111), les séquences de signal BRS associées avec les ports AP pour signal BRS en vue d'une transmission vers l'équipement utilisateur UE (1101, 1102) dans un ou plusieurs symboles à l'intérieur d'une tranche, et

de la mémoire interfacée avec le ou les processeurs, la mémoire étant configurée pour stocker les séquences de signal BRS,

**caractérisé en ce que** :

les processeurs sont en outre configurés pour générer les séquences de signal BRS pour qu'elles soient orthogonales ou pseudo orthogonales à des séquences de signal BRS générées par des stations de base (1112) voisines afin de réduire une interférence entre cellules entre la station de base (1111) et les stations de base (1112) voisines, les séquences de signal BRS étant orthogonales lorsque des valeurs de décalage cyclique différentes sont appliquées aux séquences de signal BRS, ou bien les séquences de signal BRS étant pseudo orthogonales lorsque des séquences racine ou des index racine différents sont utilisés pour les séquences de signal BRS, dans lequel les valeurs de décalages cycliques sont définies comme une fonction d'un ou plusieurs parmi : un index de port AP pour signal BRS, un index de bloc ou un index de symbole pour chaque port AP pour signal BRS, et dans lequel les index racine sont définis comme une fonction d'un ou plusieurs parmi : un identificateur ID de cellule physique, un identificateur ID de cellule virtuelle ou un index de symbole dans la tranche.

2. Appareil selon la revendication 1, comprenant en outre un émetteur récepteur configuré pour transmettre, à l'équipement utilisateur UE (1101, 1102) les séquences de signal BRS associées aux ports AP de signal BRS dans le ou les symboles à l'intérieur de la tranche.

3. Appareil selon la revendication 1 ou la revendication 2, dans lequel le ou les processeurs sont en outre configurés pour générer les séquences de signal BRS sur la base de séquences de Zadoff-Chu, ZC, de séquences de longueur maximale, M, ou de séquences de Hadamard.

4. Appareil selon la revendication 1, dans lequel le ou les processeurs sont en outre configurés pour coder les séquences de signal BRS en vue d'une transmission sur différentes ressources par comparaison aux stations de base (1112) voisines afin de réduire l'interférence entre cellules entre la station de base (1111) et les stations de base (1112) voisines.

5. Appareil selon la revendication 1, dans lequel le ou les processeurs sont en outre configurés pour coder les séquences de signal BRS en vue d'une transmission utilisant un jeu défini de ressources, et le jeu défini de ressources est une fonction d'un identificateur ID de cellule physique lorsque les ports AP pour signal BRS qui sont pris en charge par la station de base (1111) sont d'un nombre inférieur au nombre maximal de ports AP pour signal BRS.

6. Appareil selon la revendication 1, dans lequel le ou les processeurs sont en outre configurés pour coder les séquences de signal BRS en vue d'une transmission utilisant un jeu défini de ressources, et le jeu défini de ressources est défini par

$$n_{group} = \left(N_{ID}^{cell}\right) mod(N_{group})$$ ,

dans lequel $n_{group}$ représente un index de groupe dans chaque bloc de signal BRS, $N_{ID}^{cell}$ représente un identificateur ID de cellule physique et $N_{group}$ représente le nombre de groupes dans chaque bloc de signal BRS.

7. Support unique ou multiple de stockage pouvant être lu par une machine comportant des instructions embarquées qui, lorsqu'elles sont exécutées par un ou plusieurs processeurs de station de base (1111), amènent la station de base (1111) à délivrer des séquences de signal de référence de faisceau, BRS à un équipement utilisateur, UE (1101, 1102) en effectuant des opérations suivantes :

la génération de séquences de signal BRS associé à des ports d'antennes AP pour signal BRS, les séquences de signal BRS étant en outre associées à au moins l'un parmi : un ou plusieurs index de symbole de signal BRS ou bien avec un ou plusieurs index de bloc de signal BRS,

le codage, au niveau de la station de base (1111), des séquences de signal BRS associées avec les ports AP pour signal BRS en vue d'une transmission vers l'équipement utilisateur UE (1101, 1102) dans un ou plusieurs symboles à l'intérieur d'une tranche,

**caractérisé en ce que** :

l'exécution des instructions par le ou les processeurs amène en outre la station de base (1111) à générer les séquences de signal BRS pour qu'elles soient orthogonales ou pseudo orthogonales à des séquences de signal BRS générées par des stations de base (1112) voisines afin de réduire une interférence entre cellules entre la station de base (1111) et les stations de base (1112) voisines, les séquences de signal BRS étant orthogonales lorsque des valeurs de décalage cyclique différentes sont appliquées aux séquences de signal BRS, ou bien les séquences de signal BRS étant pseudo orthogonales lorsque des séquences racine ou des index racine différents sont utilisés pour les séquences de signal BRS,

dans lequel les valeurs de décalages cycliques sont définies comme une fonction d'un ou plusieurs parmi : un index de port AP pour signal BRS, un index de bloc ou un index de symbole pour chaque port AP pour signal BRS, et

dans lequel les index racine sont définis comme une fonction d'un ou plusieurs parmi : un identificateur ID de cellule physique, un identificateur ID de cellule virtuelle ou un index de symbole dans la tranche.

8.  Support unique ou multiple de stockage pouvant être lu par une machine selon la revendication 7, comprenant en outre des instructions qui, lorsqu'elles sont exécutées, amènent la station de base (1111) à effectuer l'action suivante : la transmission, à l'équipement utilisateur UE (1101, 1102), des séquences de signal BRS associées aux ports AP pour signal BRS dans le ou les symboles à l'intérieur de la tranche.

9.  Support unique ou multiple de stockage pouvant être lu par une machine selon la revendication 7 ou la revendication 8, dans lequel les séquences de signal BRS sont générées sur la base de séquences de Zadoff-Chu, ZC, de séquences de longueur maximale, M, ou de séquences de Hadamard.

10. Support unique ou multiple de stockage pouvant être lu par une machine selon la revendication 7, comprenant en outre des instructions qui, lorsqu'elles sont exécutées, amènent la station de base (1111) à exécuter l'action suivante : le codage des séquences de signal BRS en vue d'une transmission sur différentes ressources par comparaison aux stations de base (1112) voisines afin de réduire l'interférence entre cellules entre la station de base (1111) et les stations de base (1112) voisines.

11. Support unique ou multiple de stockage pouvant être lu par une machine selon la revendication 7, comprenant en outre des instructions qui, lorsqu'elles sont exécutées, amènent la station de base (1111) à exécuter l'action suivante : le codage des séquences de signal BRS en vue d'une transmission utilisant un jeu défini de ressources, et le jeu défini de ressources est une fonction d'un identificateur ID de cellule physique lorsque les ports AP pour signal BRS qui sont pris en charge par la station de base (1111) sont d'un nombre inférieur au nombre maximal de ports AP pour signal BRS.

12. Support unique ou multiple de stockage pouvant être lu par une machine selon la revendication 7, comprenant en outre des instructions qui, lorsqu'elles sont exécutées, amènent la station de base (1111) à exécuter l'action suivante : le codage des séquences de signal BRS en vue d'une transmission utilisant un jeu défini de ressources, et le jeu défini de ressources est défini par

$$n_{group} = \left(N_{ID}^{cell}\right) mod(N_{group}) \quad,$$

dans lequel $n_{group}$ représente un index de groupe dans chaque bloc de signal BRS, $N_{ID}^{cell}$ représente un identificateur ID de cellule physique et $N_{group}$ représente le nombre de groupes dans chaque bloc de signal BRS.

EP 3 437 209 B1

FIG. 1

19

K REs

BRS: AP 0

BRS: AP 1

Subcarrier
Interleaved BRS

Block Interleaved
BRS

FIG. 2

Different cyclic shift
values are used
across symbols

One BRS uses
different cyclic shift
values in two BRS
blocks

K REs

Two BRS APs use
same cyclic shift
values

BRS: AP 0

BRS: AP 1

Symbol #0    Symbol #1

FIG. 3

| $n_{occ}$ | $[w_p(0), w_p(1), \cdots, w_p(7)]$ | | | | | | | |
|---|---|---|---|---|---|---|---|---|
| 0 | [1 | 1 | 1 | 1 | 1 | 1 | 1 | 1] |
| 1 | [1 | -1 | 1 | -1 | 1 | -1 | 1 | -1] |
| 2 | [1 | 1 | -1 | -1 | 1 | 1 | -1 | -1] |
| 3 | [1 | -1 | -1 | 1 | 1 | -1 | -1 | 1] |
| 4 | [1 | 1 | 1 | 1 | -1 | -1 | -1 | -1] |
| 5 | [1 | -1 | 1 | -1 | -1 | 1 | -1 | 1] |
| 6 | [1 | 1 | -1 | -1 | -1 | -1 | 1 | 1] |
| 7 | [1 | -1 | -1 | 1 | -1 | 1 | 1 | -1] |

# FIG. 4

BRS Block

Cell #0

Cell #1

Cell #0, BRS: AP 0

Cell #0, BRS: AP 1

Cell #0, BRS: AP 2

Cell #0, BRS: AP 3

Cell #1, BRS: AP 0

Cell #1, BRS: AP 1

Cell #1, BRS: AP 2

Cell #1, BRS: AP 3

FIG. 5

BRS Block

Cell #0    Cell #1    Cell #2    Cell #3

Cell #0, BRS: AP 0

Cell #0, BRS: AP 1

Cell #1, BRS: AP 0

Cell #1, BRS: AP 1

Cell #2, BRS: AP 0

Cell #2, BRS: AP 1

Cell #3, BRS: AP 0

Cell #3, BRS: AP 1

FIG. 6

BRS Block

Cell #0    Cell #1    Cell #2

Cell #0, BRS: AP 0

Cell #0, BRS: AP 1

Cell #1, BRS: AP 0

Cell #1, BRS: AP 1

Cell #2, BRS: AP 0

Cell #2, BRS: AP 1

Cell #3, BRS: AP 0

Cell #3, BRS: AP 1

FIG. 7

800

Generate, at the base station, one or more BRS
sequences associated with one or more BRS
antenna ports (APs), wherein the one or more BRS
sequences are further associated with at least one
of: one or more BRS symbol indexes or one or more
BRS block indexes

810

Encode, at the base station, the one or more BRS
sequences associated with the one or more BRS
APs for transmission to the UE in one or more
symbols within a slot

820

# FIG. 8

900

| Detect, at the UE, one or more BRS sequences associated with a plurality of BRS antenna ports (APs) received from the base station in one or more symbols within a slot | 910 |

| Select, at the UE, one or more beams associated with the one or more BRS sequences based on a receive signal quality associated with each of the one or more BRS sequences | 920 |

| Encode, at the UE, an indication of the one or more selected beams for transmission to the base station | 930 |

FIG. 9

1000

Generating, at the base station, one or more BRS sequences associated with one or more BRS antenna ports (APs), wherein the one or more BRS sequences are further associated with at least one of: one or more BRS symbol indexes or one or more BRS block indexes

1010

Encoding, at the base station, the one or more BRS sequences associated with the one or more BRS APs for transmission to the UE in one or more symbols within a slot

1020

FIG. 10

FIG. 11

FIG. 12

FIG. 13

Mobile
Device

Multiple
Antennas

Wireless
Modem

Non-Volatile
Memory Port

Speaker

Liquid Crystal Display
(LCD) Screen and/or
Touch Screen Display

Speaker

Application
Processor

Graphics
Processor

Storage
Medium

Internal
Memory

Keyboard

Microphone

FIG. 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20120002740 A1
- WO 2015141071 A1
- EP 2467985 A1